# EUROPÄISCHE PATENTSCHRIFT

(11) **EP 3 345 198 B1**
(45) Veröffentlichungstag und Bekanntmachung des Hinweises auf die Patenterteilung: **05.05.2021**
(21) Anmeldenummer: 15813797.6
(22) Anmeldetag: 16.12.2015
(51) Int. Cl.: H01B 17/28, H01B 19/00, H01B 1/02, H01B 3/42, H02G 15/107

(54) **HOCHSPANNUNGSVORRICHTUNG UND VERFAHREN ZU DEREN HERSTELLUNG**
HIGH-VOLTAGE APPARATUS AND METHOD FOR PRODUCING SAME
DISPOSITIF HAUTE TENSION ET SON PROCÉDÉ DE FABRICATION

(43) Veröffentlichungstag der Anmeldung: 11.07.2018
(73) Patentinhaber: Siemens Energy Global GmbH & Co. KG, 81739 München (DE)
(72) Erfinder: SCHNITZLER, Tim, 52372 Kreuzau (DE); PAUL, Christian, 53347 Alfter (DE); TITZE, Joachim, 40882 Ratingen (DE)
(86) Internationale Anmeldenummer: PCT/EP2015/079954
(87) Internationale Veröffentlichungsnummer: WO 2017/101992

(56) Entgegenhaltungen:
- WO-A1-2015/172806
- DE-A1- 2 911 402
- GB-A- 345 604
- US-A- 3 783 181
- US-A- 4 424 551

## Beschreibung

Die Erfindung betrifft eine Hochspannungsvorrichtung mit einem Innenleiter, einem den Innenleiter entlang dessen Längsrichtung umgebenden Isolierkörper, umfassend Isolierlagen aus einem synthetischen Material, das mit einem Harz imprägniert ist, sowie elektrisch leitende Steuereinlagen zur Feldsteuerung, die konzentrisch um den Innenleiter angeordnet und durch die Isolierlagen voneinander beabstandet sind, wobei wenigstens eine der Steuereinlagen eine Kontakteinlage ist, die mittels einer Kontaktierungseinrichtung mit dem Innenleiter elektrisch verbunden ist, wobei die Kontaktierungseinrichtung ein Kontaktelement aus elektrisch leitfähigem Material umfasst, das mit der Kontakteinlage elektrisch verbunden ist.

Hochspannungsvorrichtungen dieser Art sind aus dem Stand der Technik bekannt. Sie haben im Allgemeinen die Aufgabe, eine sich auf Hochspannungspotential befindende Hochspannungsleitung mit einem stromführenden Stromleiter von einer sich im Wesentlichen auf Erdpotential befindenden Umgebung zu isolieren.

Der Innenleiter der bekannten Hochspannungsvorrichtung ist allerdings meist nicht ideal zylindersymmetrisch und weist herstellungsbedingte Unregelmäßigkeiten in seiner Oberfläche auf. Aus diesen Gründen ist die Feldverteilung in der Umgebung des Innenleiters im Allgemeinen inhomogen, was eine Herabsetzung der Funktionsfähigkeit der Hochspannungsvorrichtung zur Folge haben kann.

Daraus ergibt sich die elektrotechnische Notwendigkeit, den Innenleiter mit der Kontakteinlage mittels der Kontaktierungseinrichtung elektrisch zu verbinden. Dies wird auch als Ankontaktierung bezeichnet.

Die WO 2015/172806 A1 offenbart eine Hochspannungsvorrichtung in Form einer Hochspannungsdurchführung mit Isolierlagen, die ein synthetisches Material in Form eines Kunststoff-Vlieses umfassen. Bei der aus der WO 2015/172806 A1 bekannten Hochspannungsdurchführung ist das Kontaktelement durch ein flexibles Metallband ausgeführt. Das Metallband ist an einem seiner Enden mit dem Innenleiter und mit dem anderen Ende an der Kontakteinlage fixiert. Ferner ist das Metallband fest von einem Isoliermaterial des Isolierkörpers umschlossen.

Eine Hochspannungsdurchführung mit einer elektrischen Ankontaktierung einer Steuereinlage ist aus der DE 29 11 402 A1 bekannt.

Eine lötfreie elektrische Verbindung innerhalb einer Kondensatoranordnung wird in der US 4 424 551 A1 beschrieben.

Die Aufgabe der Erfindung besteht darin, eine artgemäße Hochspannungsvorrichtung vorzuschlagen, die eine möglichst zuverlässige Spannungsisolierung bereitstellt.

Die Aufgabe wird gemäß Anspruch 1 bei einer artgemäßen Hochspannungsvorrichtung dadurch gelöst, dass das Kontaktelement mittels Klebung an einer leitenden, sich mit dem Innenleiter im elektrischen Kontakt befindenden Unterlage fixiert ist.

Die erfindungsgemäße Hochspannungsvorrichtung weist den Vorteil auf, dass die Verbindung des Kontaktelementes mit der Unterlage lötfrei ausgebildet ist. Das bedeutet, dass bei der Herstellung der Hochspannungsvorrichtung auf Lötarbeiten in unmittelbarer Nähe des Isolierkörpers verzichtet werden kann. Solche Lötarbeiten könnten ansonsten zur Herstellung eines dauerhaften elektrischen Kontaktes das die Kontaktstelle zwischen Kontaktelement und Unterlage notwendig sein. Insbesondere, wenn der Isolierkörper synthetische Materialien umfasst, kann es bei einem solchen Lötvorgang zu einer Beschädigung des die Lötstelle umgebenden Isolierkörpers kommen. Synthetische Materialien können beim Löten in deren unmittelbarer Nähe schmelzen oder verbrennen. Die erfindungsgemäße Hochspannungsvorrichtung erlaubt es vorteilhaft, eine solche Beschädigung des Isolierkörpers, aus der eine lokale Minderung der Spannungsfestigkeit folgen kann, zu vermeiden. Damit kann vorteilhaft die Zuverlässigkeit der gesamten Hochspannungsvorrichtung erhöht werden.

Da sich das Kontaktelement im betriebsbereiten Zustand radial zwischen dem Innenleiter und der Kontakteinlage befindet, wird es geeigneterweise mittels Klebung an der Unterlage fixiert bevor die Kontakteinlage, bevorzugt durch Aufwickeln, angebracht wird. Es ist insbesondere möglich, dass das Kontaktelement selbst mehrstückig ausgebildet ist, wobei mehrere Bauteile des Kontaktelementes miteinander außerhalb der Hochspannungsvorrichtung auch mittels Löten miteinander verbunden werden können. Die Vorteile der erfindungsgemäßen Hochspannungsvorrichtung werden dadurch erreicht, dass die Fixierung des gesamten Kontaktelementes an der Unterlage mittels Klebung, also einer klebenden Verbindung zwischen Kontaktelement und Unterlage, hergestellt ist.

Die erfindungsgemäße Hochspannungsvorrichtung ist beispielsweise eine Hochspannungsdurchführung, die Teil einer Hochspannungsanlage sein kann. Bei der Hochspannungsanlage kann es sich zum Beispiel um eine gasisolierte Schaltanlage, einen Hochleistungstransformator oder auch um einen Umrichter handeln. Die Hochspannungsdurchführung ist geeigneterweise an einer Wandung der Hochspannungsanlage befestigt und dient zur Isolierung der Anschlüsse oder Leitungen der Hochspannungsanlage gegenüber dem Erdpotenzial.

Gemäß einer Ausführungsform der Erfindung umfasst das Kontaktelement ein erstes Kontaktstück und ein mit dem ersten Kontaktstück verbundenes, flexibles zweites Kontaktstück, wobei das erste Kontaktstück an der Unterlage fixiert ist und das zweite Kontaktstück die Kontakteinlage elektrisch kontaktiert. Die beiden Kontaktstücke können aus dem gleichen oder auch jeweils einem unterschiedlichen elektrisch leitenden Material bestehen. Sie können miteinander mittels einer Lötverbindung verbunden sein. Das erste Kontaktstück ist zweckmäßigerweise in seiner Form möglichst vorteilhaft für eine Klebeverbindung mit der Unterlage ausgebildet. Das zweite Kontaktstück ist zweckmäßigerweise in seiner Form möglichst vorteilhaft für eine elektrische Kontaktierung mit der Kontakteinlage ausgebildet. Beispielsweise können das erste Kontaktstück flächig und starr zur Verklebung mit einer flachen Unterlage und das zweite Kontaktstück länglich und flexibel zur Anbindung mit der Kontakteinlage sein.

Bevorzugt ist das erste Kontaktstück ein Flachstück aus verzinntem Kupfer. Das Flachstück kann als eine flache Scheibe oder Platte ausgebildet sein. Die Form entspricht dabei geeigneterweise der Form der Unterlage, so dass eine flächige Anpassung des Flachstücks und der Unterlage möglich ist.

Vorzugsweise ist das erste Kontaktstück auf der Unterlage mit einem Klebstoff umrandet. Auf diese Weise ist eine ausreichende Fixierung des Kontaktelements auf der Unterlage möglich, wobei zugleich ein direkter Kontakt zwischen der Unterlage und dem Kontaktstück besteht. Dies gewährleistet die elektrische Kontaktierung zwischen der Unterlage und dem Kontaktelement.

Geeigneterweise ist das zweite Kontaktstück ein Metallband. Das Metallband ist aufgrund seiner Flexibilität besonders dazu geeignet, im Herstellungsprozess der Hochspannungsvorrichtung die elektrische Verbindung zur Kontakteinlage herzustellen.

Gemäß einer Ausführungsform der Erfindung ist die Unterlage eine Außenoberfläche des Innenleiters. In diesem Fall ist das Kontaktelement direkt auf dem Innenleiter fixiert. Die Kontakteinlage ist die dem Innenleiter nächstliegende Steuereinlage.

Gemäß einer weiteren Ausführungsform der Erfindung ist die Unterlage eine erste Steuereinlage, die mittels eines weiteren Kontaktelementes der Kontaktierungseinrichtung mit dem Innenleiter elektrisch verbunden ist. Hierbei ist die Kontakteinlage nicht die dem Innenleiter nächstliegende Steuereinlage. Bei einigen Anwendungen, beispielsweise wenn die Hochspannungsvorrichtung ein Kabelendverschluss zur Anbindung eines Kabels an einen Leiter einer Freileitung ist, kann er von Vorteil sein, wenn die Ankontaktierung mehrere Steuereinlagen umfasst. Das heißt, dass eine Mehrzahl von Steuereinlagen im Betrieb der Hochspannungsvorrichtung auf dem Potenzial des Innenleiters liegen. Eine leitende Verbindung zwischen dem Innenleiter und der als Unterlage agierenden Steuereinlage kann auf die gleiche Weise wie die zuvor beschriebene hergestellt werden. Denkbar sind jedoch auch andere Arten der Verbindung, beispielsweise über eine Stirnseite der Hochspannungsvorrichtung.

Bevorzugt ist das synthetische Material ein Kunststoff-Vlies. Vlies weist besonders günstige Eigenschaften als Isoliermaterial auf. Mit dem Kunststoff-Vlies können besonders homogene Isolierlagen hergestellt werden. Zudem weist ein harzgetränktes Kunstoff-Vlies beispielsweise gegenüber harzgetränktem Papier eine geringere Feuchtigkeitsaufnahme auf. Es ist jedoch ebenfalls denkbar, wenn ein anderes geeignetes synthetisches Material, wie beispielsweise ein Kunststoffgewebe, verwendet wird.

Vorzugsweise umfasst das Kunststoff-Vlies Polyester. Das Kuststoff-Vlies kann aus Endlosfilamenten aufgebaut sein, die aus Polyester bestehen. Möglich ist es ebenfalls, wenn das Kunststoff-Vlies andere Materialien, beispielsweise andere geeignete thermoplastische Kunststoffe umfasst. Gemäß einer Variante der Erfindung umfasst das Kunststoff-Vlies Polyethylen.

Die Erfindung betrifft ferner ein Verfahren zur Herstellung einer Hochspannungsvorrichtung.

Die Aufgabe der Erfindung besteht darin, ein solches Verfahren anzugeben, das die Herstellung einer möglichst zuverlässigen Hochspannungsdurchführung ermöglicht.

Die Aufgabe wird durch ein artgemäßes Verfahren gemäß Anspruch 10 gelöst, bei dem ein Innenleiter als Wickelträger bereitgestellt wird, Isolierlagen, umfassend ein synthetisches Material, abwechselnd mit leitenden Steuereinlagen zur Feldsteuerung auf den Wickelträger aufgewickelt werden, so dass ein den Innenleiter umgebender Isolierkörper gebildet wird, wobei eine der Steuereinlagen eine Kontakteinlage ist, die mit dem Innenleiter elektrisch verbunden wird, wobei ein zumindest teilweise flexibles Kontaktelement aus einem leitfähigen Material auf einer sich mit dem Innenleiter im elektrischen Kontakt befindenden Unterlage mittels Klebung fixiert und miteingewickelt wird, vor dem Aufwickeln der Kontakteinlage eine Öffnung im Isolierkörper bereitgestellt wird, wobei das Kontaktelement durch die Öffnung hindurch entfaltet wird, worauf durch aufwickeln der Kontakteinlage eine elektrische Verbindung zwischen dem Kontaktelement und der Kontakteinlage hergestellt wird.

Gemäß der Erfindung wird der Isolierkörper durch Aufwickeln der Isolierlagen abwechseln mit den Steuereinlagen gebildet, wobei selbstverständlich mehrere Isolierlagen zwischen zwei Steuereinlagen aufgewickelt sein können. Ist die Unterlage durch die Oberfläche des Innenleiters selbst gebildet, so wird vor dem Aufwickeln der Isolierlagen das Kontaktelement auf dem Innenleiter fixiert bzw. geklebt und miteingewickelt. Dabei werden die Isolierlagen um den Innenleiter und zugleich auch um das Kontaktelement gewickelt. Ist die Unterlage durch eine der Steuereinlagen, beispielsweise durch eine dem Innenleiter nächstliegende Steuereinlage gebildet, so wird nach dem Aufwickeln der betreffenden Steuereinlage das Kontaktelement auf die betreffende Steuereinlage geklebt. Anschließend werden weitere Isolierlagen um die betreffende Steuereinlage und zugleich um das Kontaktelement gewickelt. Die Herstellung einer leitenden Verbindung zwischen der betreffenden Steuereinlage und dem Innenleiter kann selbstverständlich ebenfalls wie hier im Zusammenhang mit dem erfindungsgemäßen Verfahren beschrieben durchgeführt werden. Vor dem Aufwickeln der Kontakteinlage wird an der Stelle des Isolierkörpers, wo das Kontaktelement eingewickelt angeordnet ist, eine Öffnung in dem Isolierkörper bereitgestellt, beispielsweise herausgeschnitten. Durch die Öffnung kann dann das Kontaktelement in radiale Richtung entfaltet werden, so dass sich zumindest ein Teil des Kontaktelementes in die radiale Richtung nach außen erstreckt. Anschließend kann die Kontakteinlage aufgewickelt werden. Zwischen dem Kontaktelement und der Kontakteinlage wird damit eine elektrische Verbindung hergestellt. Die übrigen Isolierlagen und die übrigen Steuereinlagen werden dann auf die Kontakteinlage aufgewickelt, so dass der gesamte Isolierkörper gebildet wird. Es ist zu beachten, dass der Isolierkörper den Innenleiter nicht entlang dessen gesamten Länge axial umgeben muss. Es ist vielmehr möglich, dass der Innenleiter einseitig oder beidseitig aus dem Isolierkörper herausgeführt ist. Der gesamte Isolierkörper kann anschließend mit einem aushärtbaren Harz, beispielsweise einem Epoxidharz imprägniert werden. Dazu wird der Isolierkörper mit dem Harz getränkt und anschließend einem Trocknungsvorgang unterzogen. Die Steuereinlagen sind vorzugsweise aus einer Aluminiumfolie gebildet.

Vorzugsweise wird die Öffnung vor dem Aufwickeln der Kontakteinlage mit einem Isolationsmaterial gefüllt. Somit kann die Spannungsfestigkeit der Hochspannungsvorrichtung auch an der Stelle der Öffnung gewährleistet werden. Besonders bevorzugt wird die Öffnung mit dem Material der Isolierlagen, dem Kunststoff-Vlies, gefüllt.

Bei dem erfindungsgemäßen Verfahren können im Übrigen alle im Zusammenhang mit der erfindungsgemäßen Hochspannungsvorrichtung beschriebenen Merkmale einzeln oder in Kombination verwendet werden.

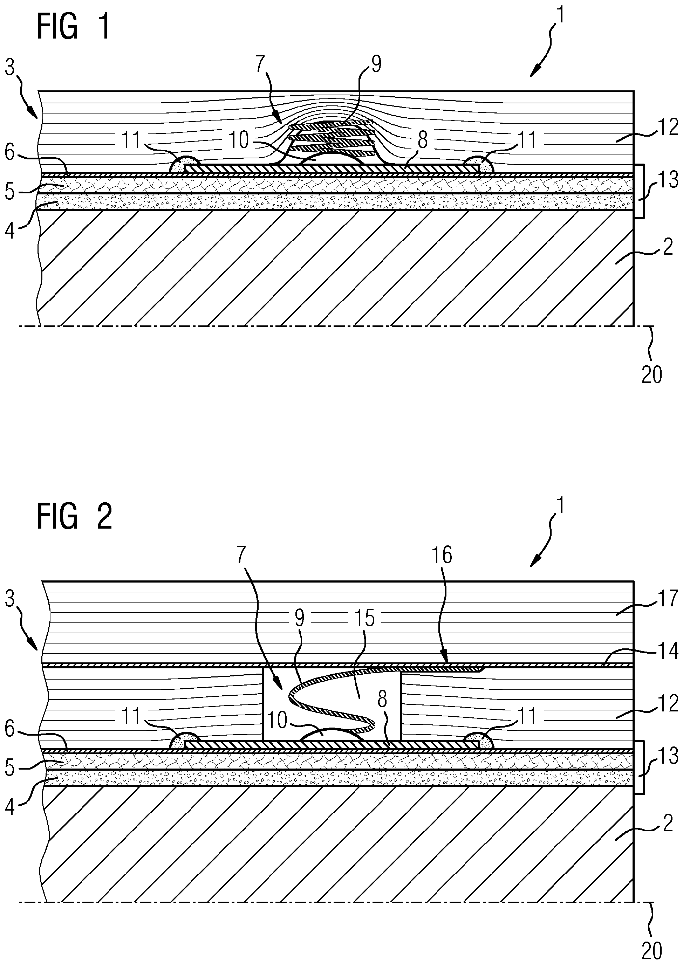

Die Erfindung soll im Folgenden anhand eines in der Figuren 1 und 2 beschriebenen Ausführungsbeispiels erläutert werden.
Figur 1 zeigt ein Ausführungsbeispiel einer erfindungsgemäßen Hochspannungsvorrichtung in einem ersten Zustand;
Figur 2 zeigt die Hochspannungsvorrichtung der Figur 1 in einem zweiten Zustand.

Im Einzelnen ist in Figur 1 ein schematischer Teilquerschnitt durch eine Hochspannungsvorrichtung 1 dargestellt. Die Hochspannungsvorrichtung 1 umfasst einen Innenleiter 2 aus Aluminium, der von einem Isolierkörper 3 in einer Längsrichtung 20 umgeben ist. Zwischen dem Innenleiter 2 und dem Isolierkörper 3 ist eine Korkschicht 4 zur Minderung mechanischer Spannungen in der Hochspannungsvorrichtung 1 angeordnet.

Die in Figur 1 dargestellte Hochspannungsvorrichtung 1 befindet sich in einem ersten Zustand, in dem der Isolierkörper 3 nicht vollständig gebildet ist. Zur Verdeutlichung des Herstellungsprozesses sind einige Bauteile in Figur 1 vergrößert dargestellt, so dass die Größenverhältnisse lediglich schematisch zu verstehen sind und den echten Größenverhältnissen nicht genau entsprechen müssen.

Der teils gebildete Isolierkörper 3 umfasst eine erste Isolierlage 5 zwischen der Korkschicht 4 und einer ersten, dem Innenleiter 2 nächstliegenden Steuereinlage 6. Die Steuereinlage 6 besteht aus einer dünnen Aluminiumfolie.

Die Hochspannungsvorrichtung 1 umfasst ferner eine Kontaktierungseinrichtung zur Herstellung einer elektrischen Verbindung zwischen einer Kontakteinlage 14 (vgl. Figur 2) und dem Innenleiter 2.

Die Kontaktierungseinrichtung umfasst ein Kontaktelement 7 mit einem ersten Kontaktstück 8 und einem zweiten Kontaktstück 9, die mittels einer Lötverbindung 10 miteinander elektrisch leitend verbunden sind. Das erste Kontaktstück 8 ist als ein Flachstück aus verzinntem Kupfer auf die Steuereinlage 6 gelegt und mit ihr verklebt, wobei mittels eines Klebstoffes eine Umrandung 11 des ersten Kontaktstücks 8 gebildet ist. Das zweite Kontaktstück 9 ist durch ein flexibles Kupferband gebildet. Das zweite Kontaktstück 9 wird vor dem aufwickeln einer zweiten Isolierlage 12 ziehharmonikaartig zusammengefaltet.

Die Kontaktierungseinrichtung umfasst ferner ein weiteres elektrisch leitendes Kontaktelement 13 zwischen der Steuereinlage 6 und dem Innenleiter 2. Das weitere Kontaktelement 13 ist in Figur 1 lediglich schematisch gezeigt.

Figur 2 zeigt die Hochspannungsvorrichtung 1 der Figur 1 in einem zweiten Zustand, nämlich nach dem Aufwickeln der Kontakteinlage 14. In den Figuren 1 und 2 sind gleiche und gleichartige Elemente mit gleichen Bezugszeichen versehen.

Der Isolierkörper 3 weist eine Öffnung 15 auf, die vor dem Aufwickeln der Kontakteinlage 14 in den Isolierkörper 3 beziehungsweise in die zweite Isolierlage 12 hineingeschnitten wurde. Das zweite Kontaktstück 9 wird durch die Öffnung 15 hindurch entfaltet, so dass es sich bis zur Höhe der Kontakteinlage 14 erstreckt. Zur besseren Kontaktierung wird das zweite Kontaktstück 9 über eine zur Öffnung 15 angrenzende Stelle 16 der zweiten Isolierlage 12 gelegt. Anschließend wird die Kontakteinlage 14 auf die zweite Isolierlage 12 gewickelt, wobei das zweite, auf die Stelle 16 gelegte Kontaktstück miteingewickelt wird, so dass ein zuverlässiger elektrischer Kontakt zwischen dem Kontaktelement 7 und der Kontakteinlage 14 hergestellt ist. Danach kann eine dritte Isolierlage 17 sowie weitere Steuereinlagen und Isolierlagen (in Figur 2 grafisch nicht dargestellt) aufgewickelt werden. Die gesamte Hochspannungsvorrichtung 1 wird nach dem Wicklungsvorgang mit einem Epoxidharz imprägniert, so dass ein kompakter Block entsteht, der direkt mittels eines Befestigungsflansches an einer Hochspannungsanlage montiert werden kann.

## Patentansprüche

1. Hochspannungsvorrichtung (1) mit
- einem Innenleiter (2),
- einem den Innenleiter (2) entlang dessen Längsrichtung (20) umgebenden Isolierkörper (3), umfassend
- Isolierlagen (5, 12, 17) aus einem synthetischen Material, das mit einem Harz imprägniert ist, sowie
- elektrisch leitende Steuereinlagen (6, 16) zur Feldsteuerung, die konzentrisch um den Innenleiter (2) angeordnet und durch die Isolierlagen (12) voneinander beabstandet sind,
wobei wenigstens eine der Steuereinlagen (6, 16) eine Kontakteinlage (16) ist, die mittels einer Kontaktierungseinrichtung (7, 13) mit dem Innenleiter (2) elektrisch verbunden ist, wobei die Kontaktierungseinrichtung (7, 13) ein Kontaktelement (7) aus elektrisch leitfähigem Material umfasst, das mit der Kontakteinlage (16) elektrisch verbunden ist,
**dadurch gekennzeichnet, dass**
das Kontaktelement (7) mittels Klebung (11) an einer leitenden, sich mit dem Innenleiter (2) im elektrischen Kontakt befindenden Unterlage (6) fixiert ist.

2. Hochspannungsvorrichtung (1) nach Anspruch 1, wobei das Kontaktelement (7) ein erstes Kontaktstück (8) und ein mit dem ersten Kontaktstück (8) verbundenes, flexibles zweites Kontaktstück (9) umfasst, wobei das erste Kontaktstück (8) an der Unterlage (6) fixiert ist und das zweite Kontaktstück (9) die Kontakteinlage (16) elektrisch kontaktiert.

3. Hochspannungsvorrichtung (1) nach Anspruch 2, wobei das erste Kontaktstück (8) ein Flachstück aus verzinntem Kupfer ist.

4. Hochspannungsvorrichtung (1) nach Anspruch 3, wobei das erste Kontaktstück (8) auf der Unterlage (6) mit einem Klebstoff (11) umrandet ist.

5. Hochspannungsvorrichtung (1) nach einem der Ansprüche 2 bis 4, wobei das zweite Kontaktstück (9) ein Metallband ist.

6. Hochspannungsvorrichtung (1) nach einem der vorangehenden Ansprüche, wobei die Unterlage eine Außenoberfläche des Innenleiters (2) ist.

7. Hochspannungsvorrichtung (1) nach einem der Ansprüche 1 bis 5, wobei die Unterlage (6) eine erste Steuereinlage (6) ist, die mittels eines weiteren Kontaktelementes (13) der Kontaktierungseinrichtung (7, 13)mit dem Innenleiter (2) elektrisch verbunden ist.

8. Hochspannungsvorrichtung (11) nach einem der vorangehenden Ansprüche, wobei das synthetische Material ein Kunststoff-Vlies ist.

9. Hochspannungsvorrichtung (1) nach Anspruch 8, wobei das Kunststoff-Vlies Polyester umfasst.

10. Verfahren zur Herstellung einer Hochspannungsvorrichtung (1), bei dem
- ein Innenleiter (2) als Wickelträger bereitgestellt wird,
- Isolierlagen (5, 12, 17), umfassend ein synthetisches Material, abwechselnd mit leitenden Steuereinlagen (6, 16) zur Feldsteuerung auf den Wickelträger aufgewickelt werden, so dass ein den Innenleiter (2) umgebender Isolierkörper (3) gebildet wird, wobei eine der Steuereinlagen (6, 16) eine Kontakteinlage (16) ist, die mit dem Innenleiter (2) elektrisch verbunden wird, wobei
- ein zumindest teilweise flexibles Kontaktelement (7) aus einem leitfähigen Material auf einer sich mit dem Innenleiter (2) im elektrischen Kontakt befindenden Unterlage (6) mittels Klebung (11) fixiert und miteingewickelt wird,
- vor dem Aufwickeln der Kontakteinlage (16) eine Öffnung (15) im Isolierkörper (3) bereitgestellt wird, wobei das Kontaktelement (7) durch die Öffnung (15) hindurch entfaltet wird, worauf
- durch Aufwickeln der Kontakteinlage (16) eine elektrische Verbindung zwischen dem Kontaktelement (7) und der Kontakteinlage (16) hergestellt wird.

11. Verfahren nach Anspruch 10, bei dem vor dem Aufwickeln der Kontakteinlage (16) die Öffnung (15) mit einem Isolationsmaterial gefüllt wird.

12. Verfahren nach einem der Ansprüche 10 oder 11, bei dem der aufgewickelte Isolierkörper (3) mit einem Harz imprägniert wird.

## Claims

1. High-voltage device (1) having
- an internal conductor (2),
- an insulating body (3) that surrounds the internal conductor (2) along its longitudinal direction (20), comprising
- insulating layers (5, 12, 17) configured from a synthetic material that is impregnated with a resin, and
- electrically conductive control inserts (6, 16) so as to provide the field control, said control inserts being arranged in a concentric manner around the internal conductor (2) and being spaced apart from one another by means of the insulating layers (12),
wherein at least one of the control inserts (6, 16) is a contact insert (16) that is connected in an electrical manner to the internal conductor (2) by means of a contact-making device (7, 13), wherein the contact-making device (7, 13) comprises a contact element (7) that is configured from an electrically conductive material that is connected in an electrical manner to the contact insert (16),
**characterized in that**
the contact element (7) is fixed by means of an adhesive (11) to a conductive base layer (6) that is in electrical contact with the internal conductor (2).

2. High-voltage device (1) according to Claim 1, wherein the contact element (7) comprises a first contact piece (8) and a flexible second contact piece (9) that is connected to the first contact piece (8), wherein the first contact piece (8) is fixed to the base layer (6) and the second contact piece (9) is in electrical contact with the contact insert (16).

3. High-voltage device (1) according to Claim 2, wherein the first contact piece (8) is a planar piece that is configured from tin-plated copper.

4. High-voltage device (1) according to Claim 3, wherein the first contact piece (8) is edged on the base layer (6) by means of an adhesive material (11).

5. High-voltage device (1) according to any one of Claims 2 to 4, wherein the second contact piece (9) is a metal band.

6. High-voltage device (1) according to any one of the preceding claims, wherein the base layer is an outer surface of the internal conductor (2).

7. High-voltage device (1) according to any one of Claims 1 to 5, wherein the base layer (6) is a first control insert (6) that is connected in an electrical manner to the internal conductor (2) by means of a further contact element (13) of the contact-making device (7, 13).

8. High-voltage device (11) according to any one of the preceding claims, wherein the synthetic material is a non-woven synthetic material.

9. High-voltage device (1) according to Claim 8, wherein the non-woven synthetic material comprises polyester.

10. Method for producing a high-voltage device (1), in which
- an internal conductor (2) is provided as a winding carrier,
- insulating layers (5, 12, 17) that comprise a synthetic material are wrapped around the winding carrier in an alternating manner with conductive control inserts (6, 16) so as to provide the field control, with the result that an insulating body (3) that surrounds the internal conductor (2) is formed, wherein one of the control inserts (6, 16) is a contact insert (16) that is connected in an electrical manner to the internal conductor (2), wherein
- an at least in part flexible contact element (7) that is configured from a conductive material is fixed by means of an adhesive (11) onto a base layer (6) that is in electrical contact with the internal conductor (2), and conjointly wound,
- prior to the winding of the contact insert (16) an opening (15) is provided in the insulating body (3), wherein the contact element (7) is unfurled through the opening (15), and subsequently
- an electrical connection is produced between the contact element (7) and the contact insert (16) by virtue of winding the contact insert (16).

11. Method according to Claim 10, in which the opening (15) is filled with an insulating material prior to the winding of the contact insert (16).

12. Method according to either one of Claims 10 and 11, in which the wound insulating body (3) is impregnated with a resin.

## Revendications

1. Dispositif (1) de haute tension, comprenant
- un conducteur (2) intérieur,
- un corps (3) isolant entourant le conducteur (2) intérieur le long de sa direction (20) longitudinale, comprenant
- des couches (5, 12, 17) isolantes en un matériau synthétique imprégné d'une résine, ainsi que
- des couches (6, 16) intercalaires de commande, conductrices de l'électricité, pour la commande de champ, qui sont disposées concentriquement autour du conducteur (2) intérieur et qui sont mises à distance les unes des autres par les couches (12) isolantes,
dans lequel au moins l'une des couches (6, 16) intercalaires de commande est une couche (16) intercalaire de contact, qui est reliée électriquement au conducteur (2) intérieur au moyen d'un dispositif (7, 13) de mise en contact, le dispositif (7, 13) de mise en contact comprenant un élément (7) de contact en matériau conducteur de l'électricité, qui est relié électriquement à la couche (16) intercalaire de contact,
**caractérisé en ce que** l'élément (7) de contact est immobilisé au moyen d'un collage (11) sur une couche (6) inférieure conductrice, se trouvant en contact électrique avec le conducteur (2) intérieur.

2. Dispositif (1) de haute tension suivant la revendication 1, dans lequel l'élément (7) de contact comprend une première pièce (8) de contact et une deuxième pièce (9) de contact souple, reliée à la première pièce (8) de contact, la première pièce (8) de contact étant immobilisée sur la couche (6) inférieure et la deuxième pièce (9) de contact contactant électriquement la couche (16) intercalaire de contact.

3. Dispositif (1) de haute tension suivant la revendication 2, dans lequel la première pièce (8) de contact est une pièce plate en cuivre étamé.

4. Dispositif (1) de haute tension suivant la revendication 3, dans lequel la première pièce (8) de contact est bordée sur la couche (6) inférieure d'une colle (11).

5. Dispositif (1) de haute tension suivant l'une des revendications 2 à 4, dans lequel la deuxième pièce (9) de contact est un feuillard métallique.

6. Dispositif (1) de haute tension suivant l'une des revendications précédentes, dans lequel la couche inférieure est une surface extérieure du conducteur (2) intérieur.

7. Dispositif (1) de haute tension suivant l'une des revendications 1 à 5, dans lequel la couche (6) inférieure est une première couche (6) intercalaire de commande, qui est reliée électriquement au conducteur (2) intérieur au moyen d'un autre élément (13) de contact du dispositif (7, 13) de mise en contact.

8. Dispositif (1) de haute tension suivant l'une des revendications précédentes, dans lequel le matériau synthétique est un non tissé en matière plastique.

9. Dispositif (1) de haute tension suivant la revendication 8, dans lequel le non tissé en matière plastique comprend du polyester.

10. Procédé de fabrication d'un dispositif (1) de haute tension, dans lequel
- on se procure un conducteur (2) intérieur comme porte-bobine,
- on enroule sur le porte-bobine, pour la commande de champ, des couches (5, 12, 17) isolantes comprenant un matériau synthétique, en alternant avec des couches (6, 16) intercalaires de commande conductrices, de manière à former un corps (3) isolant entourant le conducteur (2) intérieur, l'une des couches (6, 16) intercalaires de commande étant une couche (16) intercalaire de contact, que l'on relie électriquement au conducteur (2) intérieur, dans lequel
- on immobilise au moyen d'un collage (11) et on enroule un élément (7) de contact souple, au moins en partie, en un matériau conducteur sur une couche (6) inférieure se trouvant en contact électrique avec le conducteur (2) intérieur,
- avant l'enroulement de la couche (16) intercalaire de contact, on ménage une ouverture (15) dans le corps (3) isolant, l'élément (7) de contact étant déployé dans l'ouverture (15), puis
- en enroulant la couche (16) intercalaire de contact, on produit une liaison électrique entre l'élément (7) de contact et la couche (16) intercalaire de contact.

11. Procédé suivant la revendication 10, dans lequel avant d'enrouler la couche (16) intercalaire de contact, on remplit l'ouverture (15) d'un matériau isolant.

12. Procédé suivant l'une des revendications 10 ou 11, dans lequel on imprègne le corps (3) isolant enroulé d'une résine.
